# EUROPÄISCHE PATENTSCHRIFT

(11) **EP 2 229 851 B1**
(45) Veröffentlichungstag und Bekanntmachung des Hinweises auf die Patenterteilung: **04.03.2015**
(21) Anmeldenummer: 10156752.7
(22) Anmeldetag: 17.03.2010
(51) Int. Cl.: A47J 31/44, B01F 3/04

(54) **Aufschäumvorrichtung**
Foaming device
Dispositif de moussage

(30) Priorität: 19.03.2009 DE 102009013937
(43) Veröffentlichungstag der Anmeldung: 22.09.2010
(73) Patentinhaber: WMF WÜRTTEMBERGISCHE METALLWARENFABRIK AG, 73309 Geislingen/Steige (DE)
(72) Erfinder: Bönsch, Torsten, 73312, Geislingen/Steige (DE); Dollner, Sander, 89079, Ulm-Wiblingen (DE); Kiefer, Alexander, 73329, Kuchen (DE); Gussmann, Jochen, 73527, Schwäbisch-Gmünd (DE)
(74) Vertreter: BRP Renaud & Partner mbB Rechtsanwälte Patentanwälte Steuerberater

(56) Entgegenhaltungen:
- DE-A1- 19 940 079
- US-A- 6 006 654

## Beschreibung

Die vorliegende Erfindung betrifft eine Aufschäumvorrichtung zum Aufschäumen von Milch zur Zubereitung von beispielsweise einem Capuccino. Die Erfindung betrifft außerdem eine Kaffeemaschine mit einer derartigen Aufschäumvorrichtung.

Eine gattungsgemäße Aufschäumvorrichtung ist beispielsweise aus der DE 44 45 436 C2 bekannt, wobei diese Aufschäumvorrichtung eine Zuleitung für Dampf, eine Zuleitung für Luft und eine Zuleitung für Milch in einem Mischbereich aufweist. Die Zuleitung für die Luft ist dabei mit einer Druckluftquelle zum Einblasen der Luft verbunden, wobei das Einblasen der Luft selbst steuerbar ist. Hierdurch sollen insbesondere zu Beginn des Aufschäumvorgangs ein verbesserter Lufteintrag und somit verbesserte Aufschäumeigenschaften erreicht werden.

Aus der US 6,006,654 A ist eine Aufschäumvorrichtung zum Aufschäumen von Milch mit einem in eine Mischkammer mündenden Dampfzuführkanal sowie einem in die Mischkammer mündenden Milchzuführkanal bekannt. Darüber hinaus ist ein Luftzuführkanal vorgesehen, wobei die Mischkammer kommunizierend mit einer Schäumkammer verbunden ist. Der Luftzuführkanal mündet in die Schäumkammer.

Aus der DE 199 40 079 A1 ist ebenfalls eine Aufschäumvorrichtung zum Aufschäumen von Milch mit einem in eine Mischkammer mündenden Dampfzuführkanal, einem in die Mischkammer mündenden Milchzuführkanal sowie mit einem Luftzuführkanal bekannt. Die Mischkammer ist dabei kommunizierend mit einer Schäumkammer verbunden.

Neben den bekannten Aufschäumvorrichtungen sind darüber hinaus Systeme bekannt, die durch ein Abschalten einer Luftzufuhr auch heiße Milch erzeugen und ausgeben können. Die erreichte Temperatur ist hierbei jedoch immer geringer als die des Schaums (Milch-Luft-Gemisch), da in der gleichen Zeit mehr Masse erwärmt werden muss. Dem wird beispielsweise dadurch entgegengewirkt, dass gesonderte Einrichtungen den Milchfluss begrenzen oder zusätzlich Dampfleitungen freigeben. Derartige zusätzliche Einrichtungen benötigen jedoch Bauraum und verursachen zusätzliche Kosten, wodurch insbesondere die Forderungen nach kompakten und kostengünstigen Geräten nicht mehr erfüllt werden kann. Generell weisen bekannte Aufschäumvorrichtungen eine Reihe von Nachteilen auf, so dass beispielsweise ein Verhältnis von Luft zur Milchmenge an einem Dampfdruck hängt und dadurch eine Auswertung des Dampfdrucks und eine Anpassung der geförderten Luftmenge nicht kostengünstig realisierbar sind. Darüber hinaus kann mit den bekannten Aufschäumvorrichtungen kein zufriedenstellendes Schaumergebnis erzielt werden, sofern die Luft mit konstantem Druck in die Dampfleitung mit schwankendem Druck eingeleitet wird. Bei kalten Aufschäumvorrichtungen wird darüber hinaus oftmals verhältnismäßig zuviel Luft in die Leitung gefördert, wodurch ein Venturiprozess gar nicht erst in Gang kommt. Dieser Effekt wird durch in den Dampfleitungen vorhandenes Kondensat noch weiter verstärkt.

Die vorliegende Erfindung beschäftigt sich mit dem Problem, für eine Aufschäumvorrichtung der gattungsgemäßen Art, eine verbesserte oder zumindest eine alternative Ausführungsform anzugeben, bei welcher wahlweise Milchschaum mit hoher Temperatur und feinporiger, stabiler Konsistenz oder auch heiße Milch, deren Temperatur derjenigen des Milchschaums entspricht, erzeugt werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer Aufschäumvorrichtung zum Aufschäumen von Milch zur Zubereitung von beispielsweise Cappuccino, mit einer Mischkammer und einer sich daran anschließenden Schäumkammer, einen Dampfzuführkanal und einen Milchzuführkanal in die Mischkammer münden zu lassen, während ein Luftzuführkanal direkt in die Schäumkammer mündet. Entgegen bisheriger Annahmen hat sich dabei gezeigt, dass die zum Aufschäumen der Milch benötigte Luft auch erst in die bereits fertig erhitzte Milch eingebracht werden kann und nicht gemeinsam mit der heißen Milch von der Mischkammer in die Schäumkammer gedrückt werden muss. Wird beispielsweise zum Fördern und Erwärmen der Milch dabei ein Venturi-Effekt genutzt, so kann dieser beispielsweise auf einen bestimmten Massenstrom und damit auf eine gewünschte Temperaturerhöhung exakt eingestellt werden. Alternativ hierzu ist auch denkbar, dass warme Milch mittels einer entsprechenden Pumpe der Mischkammer zugeführt wird. Mit der erfindungsgemäßen Aufschäumvorrichtung ist es somit äußerst einfach möglich, alternativ heiße Milch oder heißen Milchschaum zu erzeugen, welche beide über einen gemeinsamen Auslauf aus der Schäumkammer in ein Trinkgefäß einfüllbar sind. Die Erzeugung von heißer Milch ist somit durch ein vergleichsweise einfaches Abschalten der Luftzufuhr in die Schäumkammer zu erreichen, wobei bei einem gewünschten Milchschaum die Luftzufuhr wieder aktiviert wird. Ein weiterer großer Vorteil der erfindungsgemäßen Aufschäumvorrichtung liegt darin, dass ein Temperatumiveau des herzustellenden Milchschaums bzw. der auszugebenden Milch insgesamt höher eingestellt werden kann, da auf eine Wechselwirkung zwischen Dampfdruck und Luftstrom keine Rücksicht genommen werden muss. Darüber hinaus läuft ein Förderprozess auch zu Beginn deutlich stabiler ab, da der Luftstrom nicht zusätzlich stört. Ein zwischen geschäumter und nicht geschäumter Milch verbleibender Temperaturunterschied ist dabei denkbar gering, da bei ansonsten gleichen Bedingungen immer dieselbe Masse an Milch erhitzt wird.

Bei der erfindungsgemäßen Lösung ist eine Luftzufuhr in die Schäumkammer nicht nur abschaltbar, sondern insbesondere auch steuer-/regelbar. Hierdurch kann besonders individuell Einfluss auf den herzustellenden Milchschaum, insbesondere hinsichtlich dessen Konsistenz, genommen werden. Die Steuer-/Regelbarkeit kann dabei beispielsweise mittels einer geeigneten Ventileinrichtung in dem Luftzuführkanal erreicht werden, wobei diese über eine geeignete Steuer-/Regeleinrichtung angewiesen wird. Der Schaumanteil kann somit durch Steuern bzw. Regeln der Luftzufuhr nahezu beliebig verändert werden, so dass insbesondere die Herstellung von Schichtgetränken, wie beispielsweise eines Latte Macchiatos, besonders einfach zu bewerkstelligen ist. Die Feinporigkeit des Milchschaums kann darüber hinaus durch Verändern des Luftstroms eingestellt werden, wobei zusätzlich kostengünstige Luftpumpen eingesetzt werden können, da anders als bei den bisher bekannten Aufschäumvorrichtungen kein Kompromiss zwischen einer geringen Fördermenge und einem hohen Gegendruck gefunden werden muss.

Bei einer weiteren vorteilhaften Weiterbildung der erfindungsgemäßen Lösung, kann über den Luftzuführkanal alternativ auch ein Dampf-Luft-Gemisch, nur Dampf, nur Wasser, ein Geschmacksgeber, wie beispielsweise Kakaopulver, oder ein Reinigungsmittel der Schäumkammer zugeführt werden. Insbesondere das Zugeben von Getränkepulvern, wie beispielsweise Kakaopulvern, direkt in die Schäumkammer, ermöglicht ein einfaches Herstellen derartiger Mischgetränke. Durch die Zuführung von Reinigungsmittel über den Luftzuführkanal in die Schäumkammer, kann diese effektiv gereinigt und beispielsweise von Milchresten befreit werden. Auch eine reine Dampfzufuhr über den Luftzuführkanal ist von Vorteil, da hierdurch die Schäumkammer, beispielsweise nach einer Benutzung, hygienisch einwandfrei gereinigt werden kann.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

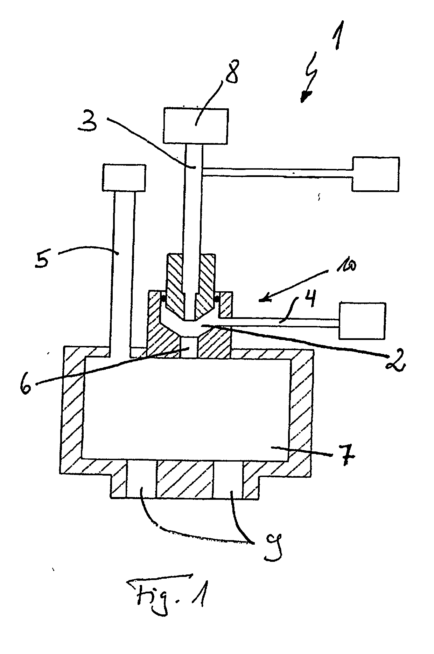

Die einzige Fig. 1 zeigt eine Schnittdarstellung durch eine erfindungsgemäße Aufschäumvorrichtung.

Entsprechend der Fig. 1, weist eine erfindungsgemäße Aufschäumvorrichtung 1 zum Aufschäumen von Milch zur Zubereitung insbesondere eines Cappuccino-Getränkes, einen in eine Mischkammer 2 mündenden Dampfzuführkanal 3, einen ebenfalls in die Mischkammer 2 mündenden Milchzuführkanal 4 sowie einen Luftzuführkanal 5 auf. Die Mischkammer 2 ist dabei kommunizierend, beispielsweise über eine als Düse ausgebildete Bohrung 6, mit einer Schäumkammer 7 verbunden. Erfindungsgemäß mündet nun der Luftzuführkanal 5 direkt in die Schäumkammer 7, wobei ein Eintritt des Luftzuführkanals 5 in die Schäumkammer 7 an einer frei wählbaren, insbesondere konstruktiv günstigen, Stelle gewählt werden kann. Gemäß der Darstellung in Fig. 1 verläuft der Luftzuführkanal 5 parallel zur Bohrung 6 und tritt von oben in die Schäumkammer 7 ein. Hierdurch ist es möglich, Milchschaum mit hoher Temperatur und feinporiger, stabiler Konsistenz zu erzeugen, wobei mit derselben Aufschäumvorrichtung 1, nur durch ein Abschalten bzw. Sperren des Luftzuführkanals 5, auch heiße Milch, deren Temperatur derjenigen des Milchschaums entspricht, erzeugt werden kann.

Entgegen bisheriger Annahmen hat sich dabei gezeigt, dass die zum Aufschäumen der Milch benötigte Luft auch erst in die bereits fertig erhitzte Milch in der Schäumkammer 7 eingebracht werden kann und nicht gemeinsam mit der heißen Milch bereits in die Mischkammer 2 eingebracht und anschließend durch die Bohrung 6 in die Schäumkammer 7 gedrückt werden muss. Wird zum Fördern und Erwärmen der Milch beispielsweise ein Venturi-Effekt eingesetzt, so kann dieser auf einen bestimmten Massestrom und damit auf die gewünschte Temperaturerhöhung eingestellt werden. Selbstverständlich ist es auch denkbar, dass warme Milch mittels einer entsprechenden, nicht gezeigten, Pumpe zugeführt wird. Generell kann dabei die Bohrung 6 - wie oben erwähnt - als Düse und damit als Beschleunigungsbohrung ausgebildet sein.

Eine Luftzufuhr in die Schäumkammer 7 über den Luftzuführkanal 6 ist dabei vorzugsweise steuer- bzw. regelbar, wodurch ein Schaumanteil durch das Regeln der Luftzufuhr nahezu beliebig verändert werden kann, was insbesondere für die Herstellung von derzeit beliebten Schichtgetränken, wie beispielsweise einem Latte Macchiato, von großem Vorteil ist. Darüber hinaus kann auch das Porenvolumen des Milchschaums durch eine veränderte Luftzufuhr in die Schäumkammer 7 eingestellt werden, wobei insbesondere kostengünstige Luftpumpen eingesetzt werden können, da anders als bei bisher bekannten Systemen kein Kompromiss zwischen einer geringen Fördermenge und einem hohen Gegendruck (Dampf) gefunden werden muss.

Von besonderem Vorteil bei der Erfindung ist, dass das Temperaturniveau des Milchschaums und der Milch selbst insgesamt höher eingestellt werden kann, da auf die Wechselwirkungen zwischen Dampfdruck und Luftstrom keinerlei Rücksicht genommen werden muss. Zudem läuft auch der Förderprozess zu Beginn deutlich stabiler ab, da der Luftstrom nicht zusätzlich in der Mischkammer 2 stört. Durch die erfindungsgemäße Aufschäumvorrichtung 1 kann ein Temperaturunterschied zwischen aufgeschäumter und nicht aufgeschäumter Milch deutlich verringert werden, da bei ansonsten gleichen Bedingungen immer die gleiche Masse Milch erhitzt wird.

Zum Reinigen des Dampfzuführkanals 3 kann beispielsweise eine Druckquelle 8, insbesondere eine Dampfdruckquelle oder eine Druckluftquelle, vorgesehen sein. Eine derartige Druckquelle 8 verhindert darüber hinaus ein Zurücksaugen von Milch in die Dampfzuführleitung 3. Gleichzeitig können hierdurch ein Nachtropfen der Milch minimiert und Milchrückstände aus der Schäumkammer 7 besser ausgeblasen werden. Daneben kann noch eine weitere Druckquelle 10 (z.B. Luft) zum entleeren der Leitungen vorgesehen sein. Die Schäumkammer 7 kann dabei einen oder auch beliebig viele Ausläufe 9 ins Freie aufweisen, wobei gemäß der Fig. 1 zwei Ausläufe 9 dargestellt sind. Denkbar ist auch, dass über den Luftzuführkanal 5 auch ein Dampf-Luft-Gemisch, nur Dampf, nur Wasser, ein Geschmacksgeber, wie beispielsweise Kakaopulver, oder ein Reinigungsmittel in die Schäumkammer 7 zugeführt werden können. Hierdurch ist die Ausgabe von Mischgetränken, wie beispielsweise Trinkschokolade, besonders einfach realisierbar. Zugleich kann auch eine Reinigung der Aufschäumvorrichtung 1 erleichtert werden, da insbesondere eine Mischung aus Reinigungsmittel und heißem Dampf, zugeführt durch den Luftzuführkanal 5, eine hohe Reinigungswirkung erzielt.

Zur Steuerung bzw. Regelung einer Luftzufuhr in die Schäumkammer 7 kann beispielsweise eine nicht gezeigte Steuerungs-/Regelungseinrichtung vorgesehen sein, die die Luftzufuhr in die Schäumkammer 7 insbesondere in Abhängigkeit eines Kesseldrucks und/oder eines Betriebszustandes einer ebenfalls nicht gezeigten Heizeinrichtung steuert bzw. regelt. Generell ist es auch denkbar, der Schäumkammer 7 während der Dosierung beispielsweise Wasser zuzugeben, um insbesondere die Dichte der Milch zu verändern und dadurch die Zubereitung von Schichtgetränken, wie beispielsweise Latte Macchiato, zu erleichtern. Darüber hinaus kann am Ende der Produktherstellung ebenfalls beispielsweise Wasser in die Schäumkammer 7 geleitet werden, um beispielsweise die Bildung von Luftblasen am Ende des Schäumprozesses zu vermeiden und/oder um die Schäumkammer 7 von Milchrückständen zu befreien.

Darüber hinaus ist denkbar, dass die Aufschäumvorrichtung 1 eine zweistufige Strahlpumpe 10 aufweist, wobei die Mischkammer 2 mit dem darin mündenden Dampfzuführkanal 3 und dem Milchzuführkanal 4 die erste Stufe bildet, woran sich die Schäumkammer 7 mit dem darin mündenden Luftzuführkanal 5 anschließt und dadurch die zweite Stufe bildet. Die zweistufige Ausbildung der Strahlpumpe 10 muss die zum Aufschäumen der Milch benötigte Luft nicht in der ersten Stufe der Strahlpumpe 10, das heißt im Bereich der Mischkammer 2, gemeinsam mit der Milch angesaugt werden, sondern es wird vom Milchstrom selbst in der zweiten Stufe, das heißt in der Schäumkammer 7, ein Unterdruck erzeugt und dadurch die Luft angesaugt. Hierdurch gelingt es, in der ersten Stufe immer denselben Massenstrom zu erwärmen, wobei im Falle der Ausgabe von geschäumter Milch die Luft vom bereits erwärmten Milchstrahl mitgerissen wird. Erreicht werden kann durch eine derartige Ausführungsform eine nahezu identische Ausgabetemperatur von geschäumter und von nicht geschäumter Milch, wobei der Aufbau der gemäß der Fig. 1 gezeigten Strahlpumpe 10 konstruktiv einfach und dadurch kostengünstig ist und sich gleichzeitig leicht reinigen lässt. Im Vergleich zu aus dem Stand der Technik bekannten Systemen, bei welchen beispielsweise die Luft mit Hilfe einer Dampfstrahlpumpe gemeinsam mit der Milch angesaugt wird, weist die erfindungsgemäße Aufschäumvorrichtung 1 den großen Vorteil auf, dass sich die Temperatur von geschäumter und nicht geschäumter Milch bei deren Ausgabe nahezu nicht mehr unterscheidet, da keine generell unterschiedlich großen Massenströme erwärmt werden müssen.

## Patentansprüche

1. Aufschäumvorrichtung (1) zum Aufschäumen von Milch mit einem in eine Mischkammer (2) mündenden Dampfzuführkanal (3), einem in die Mischkammer (2) mündenden Milchzuführkanal (4) sowie mit einem Luftzuführkanal (5), wobei die Mischkammer (2) kommunizierend mit einer Schäumkammer (7) verbunden ist und der Luftzuführkanal (5) in die Schäumkammer (7) mündet, wobei
- im Luftzuführkanal (5) eine Ventileinrichtung vorgesehen ist,
- eine Steuerungseinrichtung vorgesehen ist, welche eine Luftzufuhr in die Schäumkammer (7) über die Ventileinrichtung steuert,
**dadurch gekennzeichnet,**
**dass** über die steuerbare/regelbare Luftzufuhr in die Schäumkammer (7) ein Porenvolumen und ein Schaumanteil des herzustellenden Milchschaums einstellbar sind.

2. Aufschäumvorrichtung nach Anspruch 1,
**dadurch gekennzeichnet,**
**dass** die Mischkammer (2) über eine Beschleunigungsbohrung (6) mit der Schäumkammer (7) verbunden ist.

3. Aufschäumvorrichtung nach Anspruch 1 oder 2,
**dadurch gekennzeichnet,**
**dass** eine Druckquelle (8), insbesondere eine Druckluftquelle, zum Freiblasen des Dampfzuführkanals (3) vorgesehen ist.

4. Aufschäumvorrichtung nach einem der Ansprüche 1 bis 3,
**dadurch gekennzeichnet,**
**dass** über den Luftzuführkanal (5) alternativ auch ein Dampf-Luft-Gemisch, nur Dampf, nur Wasser, ein Geschmacksgeber, wie beispielsweise Kakao, Sirup oder ein Reinigungsmittel der Schäumkammer (7) zugeführt werden kann.

5. Aufschäumvorrichtung nach einem der Ansprüche 1 bis 4,
**dadurch gekennzeichnet,**
**dass** eine Steuerungseinrichtung vorgesehen ist, welche eine Luftzufuhr in die Schäumkammer (7) in Abhängigkeit eines Kesseldrucks und/oder eines Betriebszustandes einer Heizeinrichtung steuert.

6. Aufschäumvorrichtung nach einem der Ansprüche 1 bis 5,
**dadurch gekennzeichnet**,
die Aufschäumvorrichtung (1) eine zweistufige Strahlpumpe (10) aufweist, wobei die Mischkammer (2) mit dem darin mündenden Dampfzuführkanal (3) und dem Milchzuführkanal (4) die erste Stufe bildet, woran sich die Schäumkammer (7) mit dem darin mündenden Luftzuführkanal (5) als zweite Stufe anschließt.

7. Aufschäumvorrichtung nach einem der Ansprüche 1 bis 6,
**dadurch gekennzeichnet,**
**dass** eine Ausgabe weiterer Getränke, wie z. B. Kaffee oder Schokolade, über die Schäumkammer (7) erfolgt.

8. Kaffeeautomat mit einer Aufschäumvorrichtung (1) nach einem der Ansprüche 1 bis 7.

## Claims

1. A frothing device (1) for frothing milk comprising a steam supply channel (3), which leads into a mixing chamber (2), a milk supply channel (4), which leads into the mixing chamber (2), as well as comprising an air supply channel (5), wherein the mixing chamber (2) is connected to a frothing chamber (7) so as to communicate therewith, and the air supply channel (5) leads into the frothing chamber (7), wherein
- provision is made in the air supply channel (5) for a valve device,
- provision is made for a control device, which controls an air supply into the frothing chamber (7) via the valve device,
**characterized in**
**that** a pore volume and a froth portion of the milk froth, which is to be produced, can be adjusted via the controllable/regulatable air supply into the frothing chamber (7).

2. The frothing device according to claim 1,
**characterized in**
**that** the mixing chamber (2) is connected to the frothing chamber (7) via an acceleration borehole (6).

3. The frothing device according to claim 1 or 2,
**characterized in**
**that** provision is made for a pressure source (8), in particular a compressed air source, for blowing out the steam supply channel (3).

4. The frothing device according to one of claims 1 to 3,
**characterized in**
**that**, in the alternative, a steam-air mixture, only steam, only water, a flavoring agent, such as, for example, cocoa, syrup or a cleaning agent, can also be supplied to the frothing chamber (7) via the air supply channel (5).

5. The frothing device according to one of claims 1 to 4,
**characterized in**
**that** provision is made for a control device, which controls an air supply into the frothing chamber (7) as a function of a boiler pressure and/or of an operating state of a heating device.

6. The frothing device according to one of claims 1 to 5,
**characterized in**
**that** the frothing device (1) encompasses a two-stage jet pump (10), wherein the mixing chamber (2) forms the first stage with the steam supply channel (3), which leads into said mixing chamber, and with the milk supply channel (4), which is followed by the frothing chamber (7) comprising the air supply channel (5), which leads into said frothing chamber, as second stage.

7. The frothing device according to one of claims 1 to 6,
**characterized in**
**that** further beverages, such as, e.g., coffee or chocolate, are dispensed via the frothing chamber (7).

8. A coffee machine comprising a frothing device (1) according to one of claims 1 to 7.

## Revendications

1. Dispositif d'émulsionnement (1) pour émulsionner du lait avec un canal (3) d'alimentation de vapeur débouchant dans une chambre de mélange (2), un canal (4) d'alimentation de lait débouchant dans la chambre de mélange (2) ainsi qu'avec un canal (5) d'alimentation d'air, la chambre de mélange (2) étant reliée de manière communicante avec une chambre d'émulsion (7) et le canal (5) d'alimentation d'air débouchant dans la chambre d'émulsion (7),
- dans le canal (5) d'alimentation d'air étant prévu un système de soupapes,
- un système de commande étant prévu, lequel commande via le système de soupapes une alimentation d'air dans la chambre d'émulsion (7),
**caractérisé en ce que** par l'intermédiaire de l'alimentation d'air pilotable/réglable dans la chambre d'émulsion (7), un volume de pores et une fraction de mousse de la mousse de lait à préparer sont réglables.

2. Dispositif d'émulsionnement selon la revendication 1,
**caractérisé en ce que** la chambre de mélange (2) est reliée à la chambre d'émulsion (7) par l'intermédiaire d'un orifice d'accélération (6).

3. Dispositif d'émulsionnement selon la revendication 1 ou la revendication 2,
**caractérisé en ce qu'**il est prévu une source de pression (8), notamment une source d'air comprimé pour le soufflage du canal (3) d'alimentation de vapeur.

4. Dispositif d'émulsionnement selon l'une quelconque des revendications 1 à 3,
**caractérisé en ce que** par l'intermédiaire du canal (5) d'alimentation d'air, il peut être alimenté également en variante vers la chambre d'émulsion (7) un mélange vapeur/air, uniquement de la vapeur, uniquement de l'eau, un rehausseur de saveur, comme par exemple du cacao, du sirop ou un détergent.

5. Dispositif d'émulsionnement selon l'une quelconque des revendications 1 à 4,
**caractérisé en ce qu'**il est prévu un système de commande, lequel commande une alimentation d'air dans la chambre d'émulsion (7) en fonction d'une pression de chaudière et/ou d'un état de service d'un système de chauffage.

6. Dispositif d'émulsionnement selon l'une quelconque des revendications 1 à 5,
**caractérisé en ce que** le dispositif d'émulsionnement (1) comporte une pompe à jet (10) bi-étagée, la chambre de mélange (2) avec le canal (3) d'alimentation de vapeur qui y débouche et le canal (4) d'alimentation de lait formant le premier étage, auquel se raccorde en tant que deuxième étage la chambre d'émulsion (7) avec le canal (5) d'alimentation d'air qui y débouche.

7. Dispositif d'émulsionnement selon l'une quelconque des revendications 1 à 6,
**caractérisé en ce qu'**une distribution de boissons supplémentaires, comme par ex. du café ou du chocolat s'effectue par l'intermédiaire de la chambre d'émulsionnement (7).

8. Distributeur de café avec un dispositif d'émulsionnement (1) selon l'une quelconque des revendications 1 à 7.
